# EUROPEAN PATENT SPECIFICATION

(11) **EP 3 653 444 B1**
(45) Date of publication and mention of the grant of the patent: **14.10.2020**
(21) Application number: 19209222.9
(22) Date of filing: 19.12.2017
(51) Int. Cl.: B60R 9/058

(54) **LOAD CARRIER BRACKET**
LASTTRÄGERFUSSKLEMME
SUPPORT DE PIED DE PORTEUR DE CHARGE

(43) Date of publication of application: 20.05.2020
(62) Divisional of application: 17208327.1
(73) Proprietor: Thule Sweden AB, 335 04 Hillerstorp (SE)
(72) Inventor: ANDERSSON, Stefan, SE-331 35 Värnamo Jönköping (SE); LARSSON, Fredrik, 56791 Vaggeryd Jönköping (SE)
(74) Representative: Wallentin, Lars

(56) References cited:
- EP-A1- 2 380 777

## Description

### FIELD OF THE INVENTION

The present invention relates to a load carrier foot for supporting a load bar on a vehicle, a load carrier bracket for coupling a load carrier foot to a vehicle and to a load carrier comprising a load carrier foot and a load carrier bracket.

### BACKGROUND

Load carrier feet are an essential part of many load carrier systems. In particular, load carrier feet are an inherent component of load carrier systems in which a load bar is fixed to the roof of a vehicle.

There exist load carrier feet which are specifically designed to be used on vehicles which do not comprise a roof railing for fixing a load carrier foot. Such load carrier feet are typically coupled to the vehicle by means of a fixation bracket which is able to grab a portion of the car body. Each load carrier foot comprises a mechanism for tightening the fixation bracket to thereby clamp the load carrier foot to the vehicle roof. It is also known that the dimensions of vehicles vary and that, therefore, the load carrier systems need to be adapted to the different vehicle dimensions.

A known issue is that the position of load carrier feet on a vehicle roof vary from vehicle to vehicle. In order to address this issue, it is known to use load carrier feet which can be used with different load carrier brackets. In this way, it is possible to manufacture load carrier brackets for different vehicle types while most components of the load carrier foot can remain unchanged. The load carrier brackets need to be able to transfer high forces and need to be securely coupled to the load carrier foot. Coupling the load carrier brackets with known load carrier feet is, however, often cumbersome. The load carrier foot needs to be able to transfer high forces on the load carrier bracket. EP 2 380 777 A1 discloses a load carrier foot with a load carrier bracket according to the preamble of claim 1.

### SUMMARY

It is the object to provide an enhanced load carrier bracket.

The object is solved by a load carrier bracket according to claim 1. Advantageous further formations are subject of the dependent claims wherein specific further modifications can be gleaned from the following summary.

References to embodiments throughout the description which are not under the scope of the appended claims merely represent possible exemplary executions and are therefore not part of the present invention.

A load carrier foot for supporting a load bar on a vehicle comprises a holder adapted to receive a load carrier bracket for coupling the load carrier foot to the vehicle. The holder comprises a sleeve portion defining an accommodating space which is configured to partially accommodate the load carrier bracket.

The sleeve portion creates a 3D structure that better withstands forces acting on the system. Since the holder comprises a sleeve portion, the overall strength of the bracket is enhanced. Thus, the holder is able to withstand higher forces. Therefore, the holder can be used for transferring higher forces on other elements like the load carrier bracket. In this way, it is possible to transfer all forces necessary for tightening the load carrier bracket via the holder. The sleeve portion can comprise a box-like shape and can comprise an outer wall, an inner wall and two side walls.

Preferably, at least the sleeve portion is integrally formed by bending a metal sheet and preferably comprises an overlap section at which two joining sections of the bent metal sheet are overlapped. The overlap section can be quadrangular or trapezoidal shaped.

By integrally forming the sleeve portion and/or providing an overlapping section, the strength of the holder is further increased.

Preferably, the joining sections are joined by material forming, preferably by clinching or torxing, at at least two joining portions.

By joining the joining sections through material forming at at least two joining portions, the strength of the holder can be increased without using additional components.

Preferably, the sleeve portion is formed such that the accommodating space is tapered in the longitudinal direction towards an upper portion of the holder. In other words, the sleeve portion can be formed in a funnel-shape comprising a wide lower end and a narrow upper end.

Such a configuration has the benefit that an insertion of the load carrier bracket is simplified because a wider portion is available on the insertion side of the sleeve portion. Furthermore, such a configuration provides room for a pivoting movement of the load carrier bracket.

Preferably, the overlap section defines an outer wall of the sleeve portion. The sleeve portion can further comprise an inner wall and two side walls. At least the side walls can be inclined with respect to the longitudinal direction in order to form the tapered accommodating space.

In this way, the outer wall of the sleeve portion comprises a higher strength compared to other walls of the sleeve portion which additionally qualifies the outer wall for a force transfer on the load carrier bracket.

Preferably, the sleeve portion comprises a coupling portion formed in the inner wall. The coupling portion can be formed as an accommodating recess configured to support a tightening member for applying a pushing force on the coupling portion. The accommodating recess can comprise a supporting surface. The supporting surface can be a curved surface. Furthermore, the accommodating recess can comprise an opening for passing a portion of the tightening member through the inner wall.

By providing a coupling portion on the inner wall of the sleeve portion, it is possible to apply a force on the inner wall of the sleeve portion for urging the sleeve portion, and thus the holder, in a tightening direction. With such a configuration, a tightening force received from the tightening member is directly applied on the sleeve portion and not on the load carrier bracket. In other words, a tightening force can be applied on the load carrier bracket only by means of the holder. Since the tightening member is not directly supported on the load carrier bracket, the bracket does not have to comprise a specifically formed supporting section or seat section allowing to properly support the tightening member.

The supporting surface can be configured to directly support the tightening member. It is also possible to indirectly support the tightening member on the supporting surface using an intermediate member.

Preferably, the sleeve portion has an upper edge portion at least partially defining an upper opening of the sleeve portion. The upper edge portion can be configured for an engagement with the load carrier bracket.

By providing an upper edge portion for an engagement with the load carrier bracket a simple and reliable engagement means is provided.

Preferably, the upper edge portion is convexly formed.

Convexly forming the upper edge portion allows a load carrier bracket hooked thereon to move along the upper edge portion during a tightening process. Furthermore, in case the load carrier bracket is oriented slightly obliquely in the sleeve portion a tightening force can be securely transferred on the load carrier bracket via the upper edge portion.

Preferably, the load carrier foot further comprises an urging member configured to apply a pushing force on an engaging section of the load carrier bracket towards the upper edge portion. The urging member can be a spring element. The urging member can be arranged in the accommodating space.

The presence of the urging member leads to a configuration in which the load carrier bracket automatically snaps on the upper edge portion so that the load carrier bracket is securely hooked on the upper edge portion. Furthermore, the urging member acts as a securing device in that the load carrier bracket remains securely hooked on the upper edge portion unless a user applies a force on the load carrier bracket moving the same against the urging force of the urging member. In the state wherein no bracket is inserted in the accommodating space, the urging member can be unloaded or can already be pretensioned.

Preferably, the bracket holder comprises a lower edge portion at least partially defining a lower opening of the sleeve portion. The lower edge portion is configured to contact the load carrier bracket and to transfer a pushing force on the load carrier bracket.

Due to the sleeve shape of the holder higher forces can be transferred via the lower edge portion of the holder.

The load carrier foot can be specifically designed for supporting the load bar. The load carrier foot can comprise a support member which can be a rear cover of the load carrier foot, i.e. a cover which is arranged on the vehicle side or which is facing towards the vehicle center when the load carrier foot is mounted on the vehicle. The load carrier foot can comprise a foot pad for contacting the vehicle roof and for transferring a load onto the vehicle roof. The support member, e.g. the rear cover, can be movably, e.g. rotatably, supported on the foot pad. More precisely, a lower portion of the support member can be specifically designed to be supported on an upper side of the foot pad. Furthermore, the support member can be configured to support the load bar thereon. In other words, the upper portion of the support member can be configured to support a load bar thereon. Thus, the support member or rear cover is able to transfer a load received from a load bar onto the foot pad. In this way, a major part of a normal force applied on the load carrier foot by the load bar is directly transferred to the foot pad by means of the support member. The configuration can be such that the foot pad only receives forces from the support member, e.g. the rear cover.

According to an aspect, a load carrier bracket for coupling a load carrier foot to a vehicle is provided. The load carrier bracket comprises a vehicle engaging section and a trough-shaped coupling portion. The trough-shaped coupling portion extends from the vehicle engaging section in longitudinal direction of the load carrier bracket and comprises a holder engaging portion engageable with a holder of a load carrier foot.

By three-dimensionally forming the load carrier bracket in the above described way, the rigidity and strength of the load carrier bracket is increased.

Preferably, the trough-shaped coupling portion is funnel-shaped with the holder engaging portion being formed at a narrow end.The trough-shaped coupling portion is continuously convexly formed in its longitudinal direction and comprises an outer surface adapted to receive a force from the holder of the load carrier foot.

By providing a continuously convex formed trough-shaped coupling portion, it is possible to apply higher forces on the outer side of the coupling portion, for example by means of a lower edge of the above mentioned holder.

Preferably, the trough-shaped coupling portion extends substantially over the entire length of the bracket. In addition or alternatively, the trough-shaped coupling portion at least partially comprises a box-like shape. For example, the trough-shaped coupling portion can comprise two side walls and a bottom wall which is arranged substantially perpendicular to the side walls.

With the latter configuration, the rigidity and strength of the load carrier bracket is even more enhanced.

Preferably, the holder engaging section is configured such that the load carrier bracket can be hooked on the holder. The holder engaging section can comprise two hooks.

A load carrier can comprise a load carrier foot as described before and a load carrier bracket as described before. The load carrier bracket can be partially accommodated in the accommodating space and releasably engaged with the holder. The load carrier foot can further comprise a tightening member having a tightening member operating portion arranged in the accommodating space between an inner wall of the holder and the load carrier bracket. The holder and the load carrier bracket can comprise access openings configured to provide tool access to the tightening member operating portion.

The load carrier can comprise a load bar which is coupled to the load carrier foot. The load carrier foot can comprise the above described holder. Furthermore, the above described load carrier bracket can be inserted in the holder. The load carrier foot can comprise a foot pad which is brought in contact with the roof of a vehicle when the load carrier is mounted. The holder can be operatively coupled with a tightening mechanism of the load carrier foot. The tightening mechanism can be operated by the tightening member. The tightening mechanism can be configured to effect a movement of the holder and to operate a locking mechanism for securely locking the load bar to the load carrier foot when the tightening member is operated.

The locking mechanism can be configured to clamp the load bar on a supporting portion of the load carrier foot, which can be a portion of the rear cover. The supporting portion can be an integral part of the rear cover of the load carrier foot. The rear cover can also be referred to as support member for supporting the load bar thereon. The supporting portion can comprise a supporting surface formed in the rear cover. Accordingly, the rear cover can acts as a support for supporting the load bar. In other words, the load bar can be supported on an upper portion of the rear cover. The rear cover can be supported on the foot pad. More precisely, the rear cover can comprise a coupling portion which is engaged with the foot pad. The foot pad can be adapted to contact the vehicle roof and for transferring a load onto the vehicle roof. The rear cover can be movably, e.g. rotatably, supported on the foot pad. More precisely, a lower portion of the rear cover can be specifically designed to be supported on an upper side of the foot pad. Thus, the rear cover can be able to transfer a load received from a load bar onto the foot pad. In this way, a major part of a normal force applied on the load carrier foot by a load carried on the load bar is directly transferred to the foot pad by means of the rear cover. The configuration can be such that the foot pad only receives forces from the rear cover.

### BRIEF DESCRIPTION OF THE DRAWINGS

Fig. 1 shows a side view of a load carrier foot according to an embodiment.
Fig. 2 shows a perspective and sectional view of an assembly of the load carrier foot.
Fig. 3 shows a perspective view of a holder according to an embodiment.
Fig. 4 shows a perspective and sectional view of the holder of Fig. 3.
Fig. 5 shows a perspective view of a load carrier bracket according to an embodiment.
Fig. 6 shows a perspective and sectional view of the load carrier bracket of Fig. 5.
Fig. 7 shows a perspective rear view of the holder of Fig. 3.
Fig. 8 shows a perspective rear view of the load carrier bracket of Fig. 5.
Fig. 9 shows a top view of an assembly comprising a holder and a load carrier bracket.
Fig. 10 shows a side view of the assembly of Fig. 9.
Fig. 11 shows a perspective sectional view of the holder.
Fig. 12 shows a sectional side view of a load carrier foot mounted to a load bar and comprising a load carrier bracket.
Fig. 13 shows a perspective view of a holder.
Fig. 14 shows a perspective sectional view of a load carrier foot carrying a load bar.
Fig. 15 shows a side view of the upper part of the load carrier bracket according to an embodiment.
Fig. 16 shows a front view of the load carrier bracket of Fig. 15.
Fig. 17 shows a side view of a load carrier bracket according to an embodiment.
Fig. 18 shows a front view of the load carrier bracket of Fig. 17.
Fig. 19 shows a side view of a load carrier bracket according to an embodiment.
Fig. 20 shows a front view of the load carrier bracket of Fig. 19.
Fig. 21 shows a side view of a load carrier bracket according to an embodiment.
Fig. 22 shows a front view of the load carrier bracket of Fig. 21.
Fig. 23 shows a side view of a load carrier bracket according to a comparative example.
Fig. 24 shows a front view of the load carrier bracket of Fig. 23.
Fig. 25 shows a side view of a load carrier bracket according to an embodiment.
Fig. 26 shows a front view of the load carrier bracket of Fig. 25.
Fig. 27 shows a side view of a load carrier bracket according to an embodiment.
Fig. 28 shows a front view of the load carrier bracket of Fig. 27.
Figs. 29 to 32 show perspective views of an assembly comprising a load carrier bracket and a holder.

### DETAILED DESCRIPTION OF EMBODIMENTS

In the following, embodiments will be described with reference to the drawings. It is to be noted that similar elements in the drawings are denoted with the same reference signs.

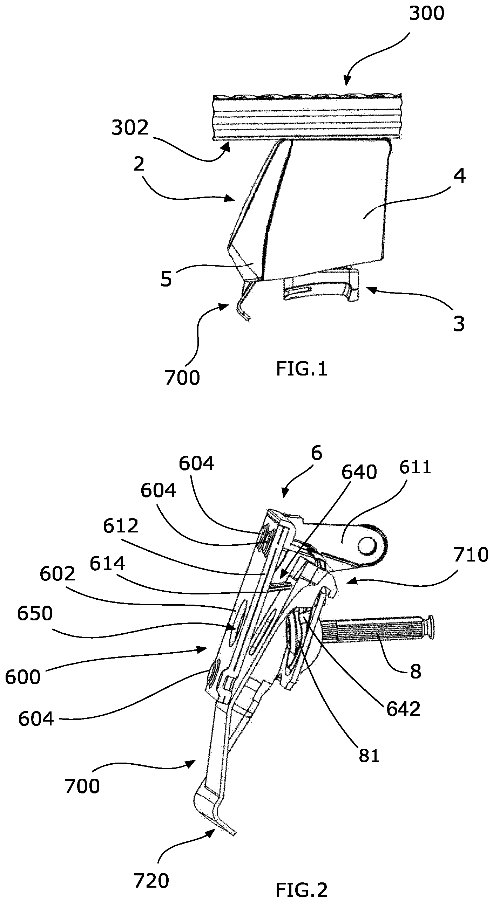

Fig. 1 shows a side view of an assembly comprising a load carrier foot 2 according to an embodiment. A load bar 300 is supported on an upper portion of the load carrier foot 2. More precisely, an outer surface 302 of the load bar 300 is supported on the upper portion of the load carrier foot 2. Furthermore, a load carrier bracket 700 is inserted into and fixedly held in the load carrier foot 2. The load carrier foot 2 further comprises a foot pad 3. The foot pad 3 is configured to be supported on the roof of a vehicle. As is further shown in Fig. 1, the load carrier foot 2 comprises a front cover 5 and a rear cover 4 which cover an interior mechanism of the load carrier foot 2.

Fig. 2 shows an assembly comprising a holder 6, a load carrier bracket 700 inserted into and coupled with the holder 6, an urging member 640 for exerting a pushing force on the load carrier bracket 700, and a tightening member 8 force transmittingly coupled to the holder 6 at an operating portion 81 thereof.

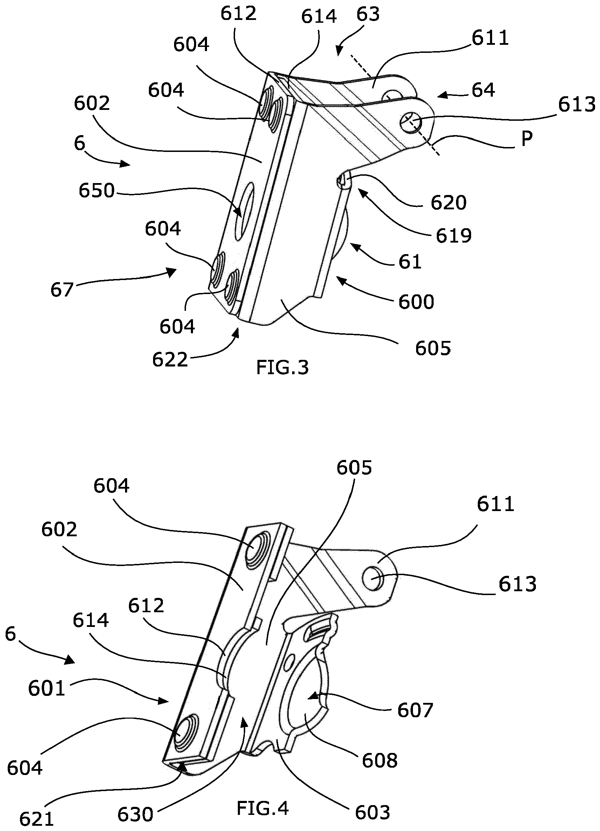

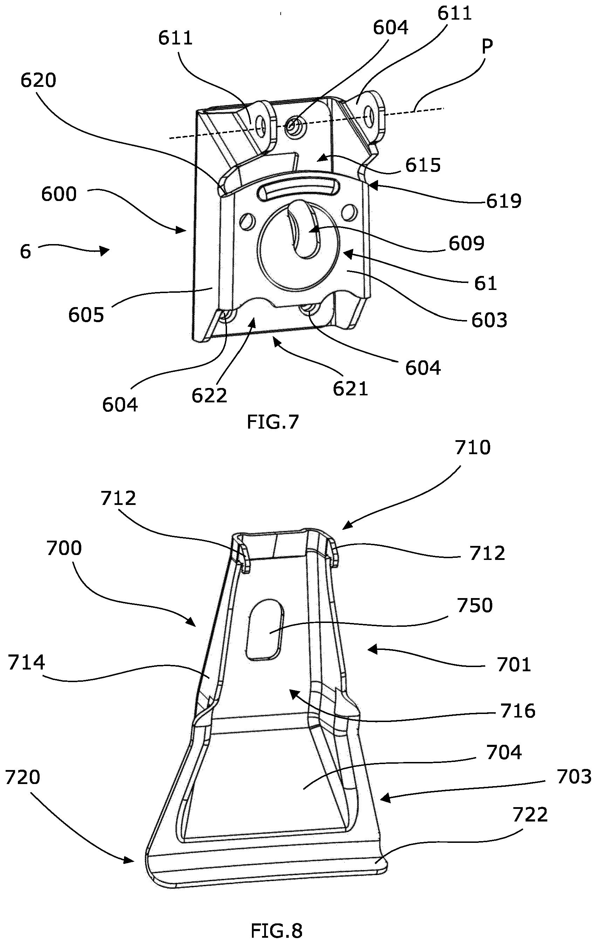

The configuration of the holder 6 will be further described with reference to Figs. 3, 4 and 7. The holder 6 comprises a sleeve portion 600 which is formed in a lower portion 67 of the holder 6. The sleeve portion 600 comprises a box-like shape and comprises an outer wall 602, an inner wall 603 and two side walls 605 connecting the inner wall 603 with the outer wall 602.

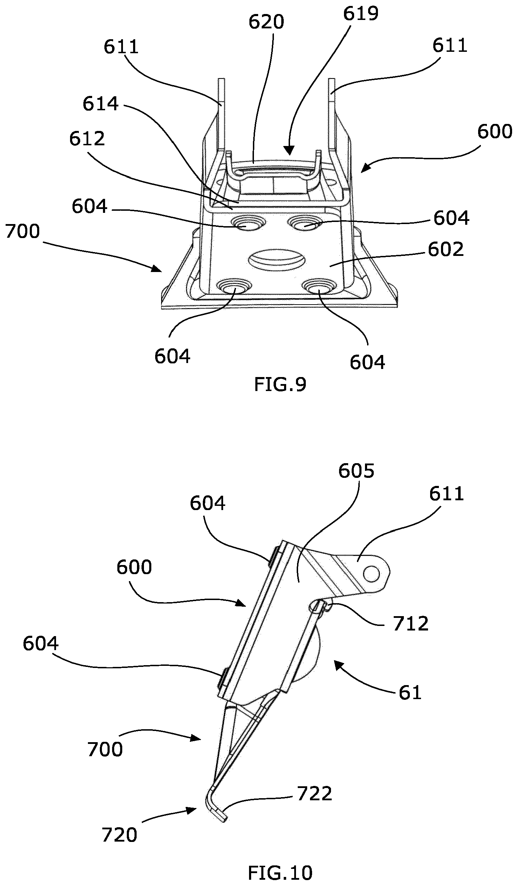

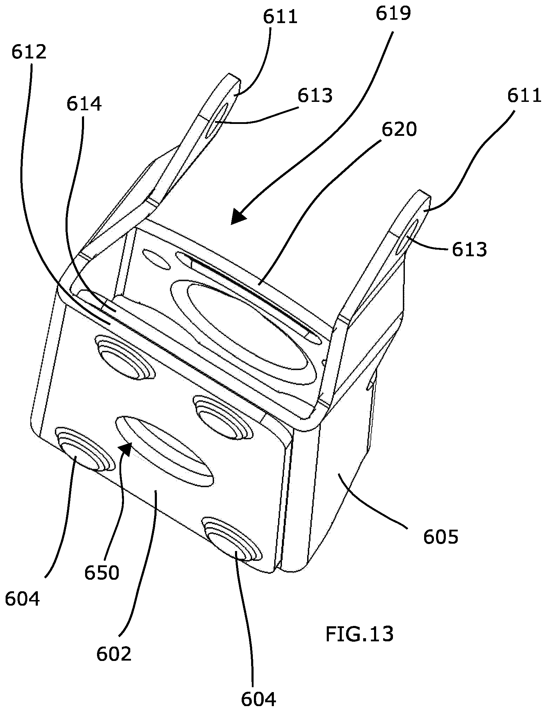

The holder 6 is integrally formed by bending a metal sheet into the described shape. The outer wall 602 is defined by an overlap section 601 which is formed by two joining sections 612, 614 of the metal sheet. The joining sections 612, 614 are arranged parallel and in contact with each other. More precisely, the joining sections 612, 614 are joined with each other by press-forming them together. In the present case, the joining sections 612, 614 are clinched together at four joining portions 604. Accordingly, the outer wall 602 is reinforced by using two layers of sheet metal that are joined to each other. As is visible in Figs. 9 and 13, the joining sections 612, 614, which can also be referred to as overlapping flanges, can extend across the entire width of the holder. This is also depicted in Fig. 13. As is also visible in the drawings, the sleeve portion has a completely closed shape encasing an accommodating space 630 in which the load carrier bracket 700 can be at least partially accommodated as is shown in the configuration of Fig. 2.

The sleeve portion 600 is open on both longitudinal sides. In other words, the sleeve portion 600 comprises a lower opening 622 and an upper opening 615. The lower opening 622 is partially defined by a lower edge portion 621 which in the present case is a lower edge of the outer wall 602. The lower edge portion 621 can also be referred to as force application section as this portion is provided for transferring a force from the holder 6 on a load carrier bracket 700 as will be described later.

Since the holder 6 comprises the above described sleeve portion the holder 6 is able to withstand higher forces so that it is possible to transfer higher forces by means of the lower edge portion 621.

The upper opening 615 of the sleeve portion 600 is partially defined by an upper edge portion 619. The upper edge portion 619 corresponds to the upper edge of the inner wall 603 and is configured for an engagement with the load carrier bracket 700. More precisely, the upper edge portion 619 is convexly formed and comprises a curved supporting surface 620 which faces in the upper direction of the holder 6.

As is also shown in the drawings, the outer wall 602 comprises an access opening 650 providing access to the accommodating space 630 from a front side of the load carrier foot 2. This access opening 650 is designed such that a tool for operating the tightening member 8 can be inserted into the accommodating space 630.

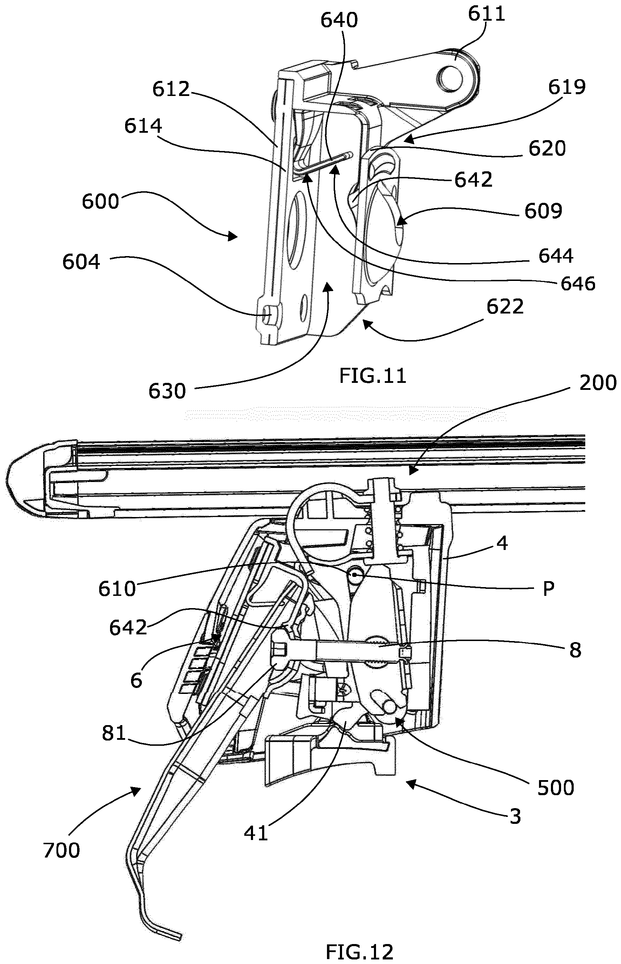

Furthermore, the holder 6 comprises an upper portion 63 which comprises a coupling portion 64. The coupling portion 64 comprises two arms 611 each having an opening 613 for accommodating a pivot pin 610 therein. The pivot pin 610 is shown in Fig. 12 and defines a pivot axis P. In other words, the pivot axis P extends through the centers of the openings 613. Accordingly, the holder 6 is configured for a pivoting movement about pivot axis P. By pivoting the holder 6, a load carrier bracket 700 inserted in the holder 6 can be tightened as will be described later.

The holder 6 comprises a coupling section 61 for supporting the tightening member 8. The tightening member 8 is an element which transfers a pushing force on the coupling portion 61 upon operation of the same. The coupling portion 61 comprises an accommodating recess 607 which is formed in the inner wall 603. The accommodating recess 607 comprises a supporting surface 608 which is formed in a spherical manner.

An opening 609 is provided in the supporting surface 608 allowing to pass a portion of the tightening member through the inner wall 603. Here, the opening is an elongate opening extending along the longitudinal direction of the sleeve portion 600. The elongate opening can have an extension length allowing to insert the tightening member via the lower opening 622. In this case, it is possible to provide an access opening 650 which is smaller than an access opening through which the tightening member 8 is to be inserted. This enhances the rigidity of the sleeve portion 600.

Accordingly, it is possible to support an end portion of the tightening member 8 on the supporting surface 608 and coupling the other end to a further element. Thus, the tightening member 8 is a pulling force transmitting element. More precisely, the tightening member 8 is a shaft nut having an operating portion 81.

As can be gathered from Fig. 2 and Fig. 12, the operating portion 81 comprises an engaging section in the form of a hexagon socket which can be reached via the above described access opening 650. The supporting surface 608 can be used to directly support the tightening member 8. However, in the configuration as described, an intermediate member 642 (see Fig. 2, Fig. 11 and Fig. 12) is provided on the supporting surface 608 and the tightening member 8 is supported on the intermediate member 642. The intermediate member 642 can cover an upper portion of the opening 609 so that the tightening member 8 is supported more properly. The intermediate member 642 can be made of a softer material. In the present configuration, the intermediate member 642 is made from plastics.

As mentioned above, an urging member 640 is provided. The urging member 640 is an elastic element which is accommodated in the accommodating space 630. In the configuration as shown in Fig. 11, the urging member 640 comprises a hook-like shape when viewed from the side. The urging member 640 comprises a contact section 644 protruding into the accommodating space 630 from the outer wall side towards the inner wall side and a supporting section 646 which is accommodated in a recess formed on the inner side of the outer wall, more precisely in the inner joining section 614. In Fig. 11, the urging member 640 is shown in an unloaded state and, therefore, the contact section is substantially straight. As already mentioned before, the urging member 640 is configured to apply an urging force on an inserted load carrier bracket 700 in order to urge the load carrier bracket towards the inner wall 603. The urging member can be made from plastics and can be integrally formed with the intermediate member 642 as described before.

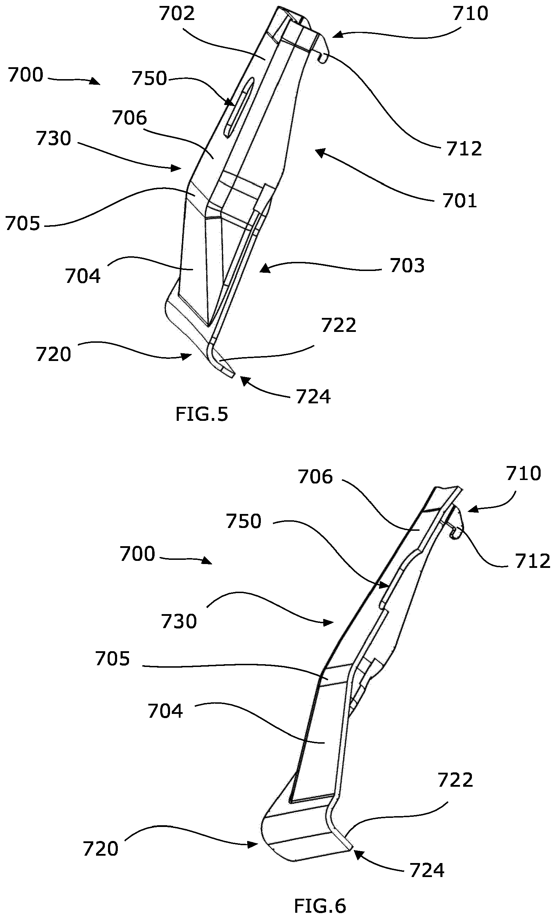

A load carrier bracket 700 which can be used with the above holder 6 will be described in the following with reference to Figs. 5, 6 and 8.

The load carrier bracket 700 comprises a vehicle engaging section 720 and a trough-shaped coupling portion 730. The vehicle engaging section 720 is configured to securely grab a portion of a vehicle body. In other words, the vehicle engaging portion 720 is specifically designed so as to fit to a specific vehicle body. As is shown, the vehicle engaging section 720 is a bent or angled portion which is coupled to the trough-shaped coupling portion 730 at one end. At its other end, the vehicle engaging section 720 comprises a free end 724 which protrudes in a direction which is angled with respect to or substantially perpendicular to a longitudinal extension direction of the trough-shaped coupling portion 730. On the free end 724, a contact surface 722 is provided which, when the load carrier foot is clamped on the vehicle roof, is pushed against the vehicle body. The vehicle engaging section 720 is configured, such that the free end 724 can be inserted into a suitable space provided on the vehicle, a space between a closed vehicle door and the vehicle body for instance.

The trough-shaped coupling portion 730 extends from the vehicle engaging section 720 in the longitudinal direction of the load carrier bracket 700. Furthermore, the trough-shaped coupling portion 730 comprises a holder engaging portion 710 which is engageable with the holder 6 of a load carrier foot 2. The trough-shaped coupling portion 730 is funnel-shaped wherein the holder engaging portion 710 is formed at an narrow end of the trough-shaped coupling portion 730.

Moreover, the trough-shaped coupling portion 730 is continuously convexly formed in its longitudinal direction and comprises an outer surface 702 adapted to receive a force from the holder 6 of the load carrier foot 2. In the context of this disclosure, continuously convexly formed means that there is a wall portion which is continuously convexly formed providing the load carrier bracket with a continuous bulging. Furthermore, continuously convexly formed means that the course of a section in longitudinal direction of the load carrier bracket is curved in only one direction and does not comprise any curvatures in the opposite direction. It is to be noted, that curved is not to be understood in the strict sense that every section has to be curved. Rather, as is shown in the drawings, substantially straight sections 704, 706 can be provided which are connected by a curved section 705 resulting in an overall curved shape.

The load carrier bracket can be formed symmetrical with respect to a middle plane at least in sections. Since the load carrier bracket has to fit to different types of vehicles, it is necessary to form the vehicle engaging section 720 according to the vehicle body of the vehicle. Accordingly, a lower portion 703 of the load carrier bracket 700 has to be formed corresponding to the vehicle body type. On the other hand, the configuration of the load carrier foot 700 remains the same for different vehicles at least regarding the fixation and engagement of the load carrier bracket 700. Therefore, an upper portion 701 of the load carrier bracket 700 which is inserted into the holder 6 can always be formed in the same manner. In practice, it turned out that the section-wise forming of the load carrier bracket 700, i.e. the separate forming of the upper portion 701 and the lower portion 703, is cost efficient as it allows the use of one and the same tool for forming the upper portion 701. In this way, only a respective specific smaller tool have to be provided for forming the lower portion 703.

The trough-shaped coupling portion 730 extends substantially over the entire length of the bracket 700 and is uninterrupted. In other words, only a single trough-shaped coupling portion is provided. Furthermore, the trough-shaped coupling portion 730 at least partially comprises a box-like shape. More precisely, the trough-shaped coupling portion 730 comprises two side walls 714 and a bottom wall 716 which is arranged substantially perpendicular to the side walls 714. The bottom wall 716 and, consequently, the outer surface 702 is convexly shaped giving the overall load carrier bracket 700 a convex shape when viewed from the side. In other words, the trough-shaped coupling portion 730 provides a bulging in only one direction. The bulging is provided on a side of the load carrier bracket 700 opposite to the side where the free end 724 of the vehicle engaging section 720 is provided. In the shown configuration, the bottom wall 716 comprises a curved section 705 arranged between two substantially flat sections 704, 706 so that the overall configuration is curved in only one direction. In other words, the bottom wall 716 does not comprise a portion which is curved in the opposite direction.

The holder engaging section 710 is configured such that the load carrier bracket 700 can be hooked on the holder 6. In the shown configuration, the holder engaging section 710 comprises two hooks 712 which are arranged at a distance to each other in lateral direction of the load carrier bracket 700. The hooks 712 are configured such that they can be engaged with the upper edge portion 619 of the sleeve portion 600 of the holder 6. The hooks 712 and the free end 724 of the vehicle engaging section 720 can be referred to as protrusions of the load carrier bracket 700 which protrude from the same side of the load carrier bracket 700. More precisely, when the load carrier bracket 700 is inserted in the load carrier foot 2 and the load carrier foot 2 is mounted on a vehicle, the hooks 712 and the free end 724 protrude towards the vehicle. In other words, the load carrier bracket 700 is inserted into the holder 6 such that the hooks 712 are located on the side of the inner wall 603 of the holder.

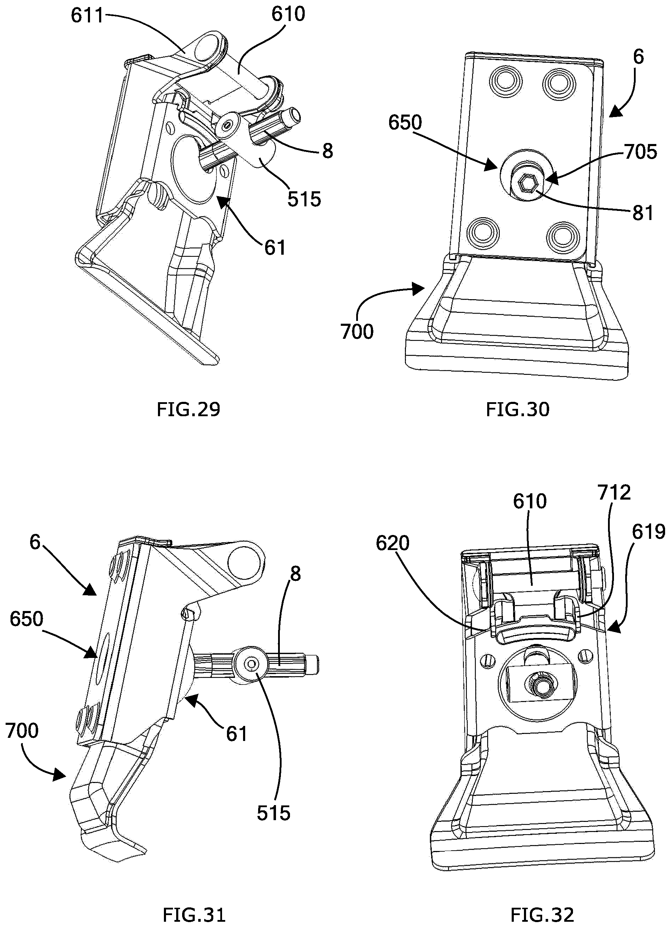

Assemblies where the above described load carrier bracket 700 is inserted into a holder 6 are shown in Figs. 2, 9, 10, 12 and 29 to 32.

The load carrier bracket 700 is inserted into the holder 6 from below. The upper portion 701 of the load carrier bracket 700 is inserted into the sleeve portion 600 through the lower opening 622 up to a position where the holder engaging portion 710 partially protrudes from the upper opening 615. More precisely, the load carrier bracket 700 is brought into a position in which the hooks 712 are located above the upper edge portion 619 so that the hooks 712 can be brought in contact with the supporting surface 620 of the upper edge portion 619.

As described above, the holder 6 comprises the urging member 640. Upon inserting the bracket, the urging member 640 comes into contact with the upper portion 701 of the load carrier bracket 700 and pushes the holder engaging portion 710 inward, i.e. towards the upper edge portion 619 so that the hooks 712 are brought into position for an engagement with the upper edge portion 619 and are held there. Accordingly, the load carrier bracket is securely held on the upper edge portion 619 and can only be removed when the load carrier bracket 700 is moved such that the holder engaging portion 710 is moved against the urging force of the urging member 640.

As mentioned before, the upper edge portion 619 is convexly curved and the hooks 712 are arranged at a distance with respect to each other. Thus, the load carrier bracket 700 is supported on the upper edge portion at two different points. The upper edge portion is wider than the width of the holder engaging section 710 leading to a configuration in which the hooks can slide on the surface 620. In other words, the upper portion 701 of the load carrier bracket 700 is formed such that the load carrier bracket is hingedly held on the upper edge portion 619. This allows a pivoting movement of the load carrier bracket 700 about the center of the curvature of the surface 620. In this way, the load carrier bracket can orient itself according to the shape of the vehicle body when the same is tightened by moving the holder 6.

As soon as the load carrier bracket 700 is engaged with the holder 6 in the above described way, the holder 6 can be rotated about the pivot axis P in counterclockwise direction in Fig. 3 in order to tighten the load carrier bracket 700. The rotation of the holder 6 is effected by an operation of the tightening member 8 which is supported on the inner wall 603 of the holder 6. By moving the holder 6, the load carrier bracket 700 is clamped between the holder 6 and the vehicle body. More precisely, the lower edge portion 621 of the holder 6 is moved towards the vehicle when the tightening member is tightened which leads to a state in which the lower edge portion 621 contacts the outer surface 702 of the load carrier bracket 700 such that the lower edge portion 621 contacts the outer surface 702 right above the curved section 705 in order to push the load carrier bracket towards the vehicle.

Furthermore, the holder 6 is held such that the pivot axis P also moves upward during the tightening process. Since the load carrier bracket 700 is supported on the upper edge portion 619 of the holder, a movement of the holder in the upward direction pulls the load carrier bracket in the upward direction so that the contact surface 722 is moved upwards and brought into firm contact with the vehicle body. Due to the shape of the holder and the shape of the bracket, it is possible to generate a higher clamping force.

As is shown in the figures, the load carrier bracket 700 comprises an access opening 750. The access opening 750 is provided such that when the load carrier bracket 700 is hooked into the holder 6 in the above described way, the access opening 750 is aligned with the access opening 650 of the holder 6. Since both openings are aligned, it is possible to reach the operating portion 81 of the tightening member 8 from the outside by passing a tool through the openings. Due to this configuration, it is possible to support the tightening member on the inner wall 603 of the holder 6. Furthermore, it is possible to insert the tightening member 8 into the holder 6 prior to the insertion of the load carrier bracket 700.

A possible use of the above assembly comprising the load carrier bracket 700 and the holder 6 in a load carrier is shown in Fig. 12. The load carrier comprises a load bar 300 which is coupled to a load carrier foot 2. The load carrier foot 2 comprises the above described holder 6. Furthermore, the above described load carrier bracket 700 is inserted in the holder 6. The load carrier foot 2 comprises a foot pad 3 which is brought in contact with the roof of a vehicle when the load carrier is mounted. The holder 6 is operatively coupled with a tightening mechanism 500 of the load carrier foot 2. The tightening mechanism 500 is operated by the tightening member 8. The tightening mechanism 500 is configured to effect a movement of the holder 6 in the above described way about the pivot axis P and to operate a locking mechanism 200 for securely locking the load bar 300 to the load carrier foot 2 when the tightening member 8 is operated. For that, the tightening member 8 is threadedly engaged with a pin 515 which is pivotably held in a force distribution member of the tightening mechanism 500. The force distribution member transfers an input force on two application sections.

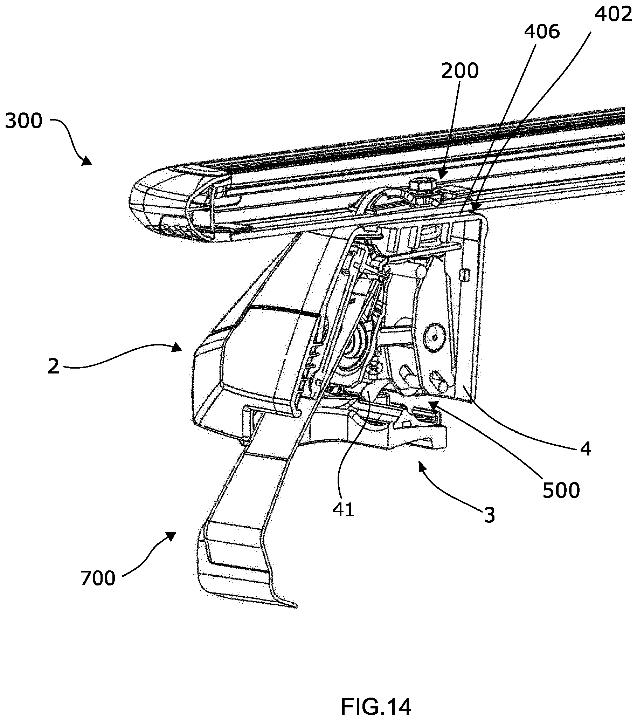

Fig. 14 shows a perspective view sectional view of a load carrier comprising a load bar 300, a load carrier foot 2 supporting the load bar 300 and the load carrier bracket 700. The load carrier foot 2 comprises the locking mechanism 200 for locking the load bar 300 on the load carrier foot 2, more precisely for clamping the load bar 300 on a supporting portion 402 of the load carrier foot 2, which is a portion of the rear cover 4. In the disclosed configuration, the supporting portion 402 is an integral part of the rear cover 4 of the load carrier foot 2. The rear cover 4 can also be referred to as support member 400 for supporting the load bar thereon. The supporting portion 402 comprises a supporting surface 406 formed in the rear cover 4. Accordingly, the rear cover 4 acts as a support for supporting the load bar 300. In other words, the load bar 300 is supported on an upper portion of the rear cover 4. The rear cover 4 is supported on the foot pad 3. More precisely, the rear cover 4 comprises a coupling portion 41 which is engaged with the foot pad 3. This coupling portion is shown in Figs. 12 and 14. The foot pad 3 is adapted to contact the vehicle roof and for transferring a load onto the vehicle roof. The rear cover, can be movably, e.g. rotatably, supported on the foot pad. More precisely, a lower portion of the rear cover can be specifically designed to be supported on an upper side of the foot pad 3. Thus, the rear cover 4 is able to transfer a load received from a load bar 300 onto the foot pad 3. In this way, a major part of a normal force applied on the load carrier foot 2 by the load bar 300 is directly transferred to the foot pad 3 by means of the rear cover. The configuration is such that the foot pad 3 only receives forces from the rear cover.

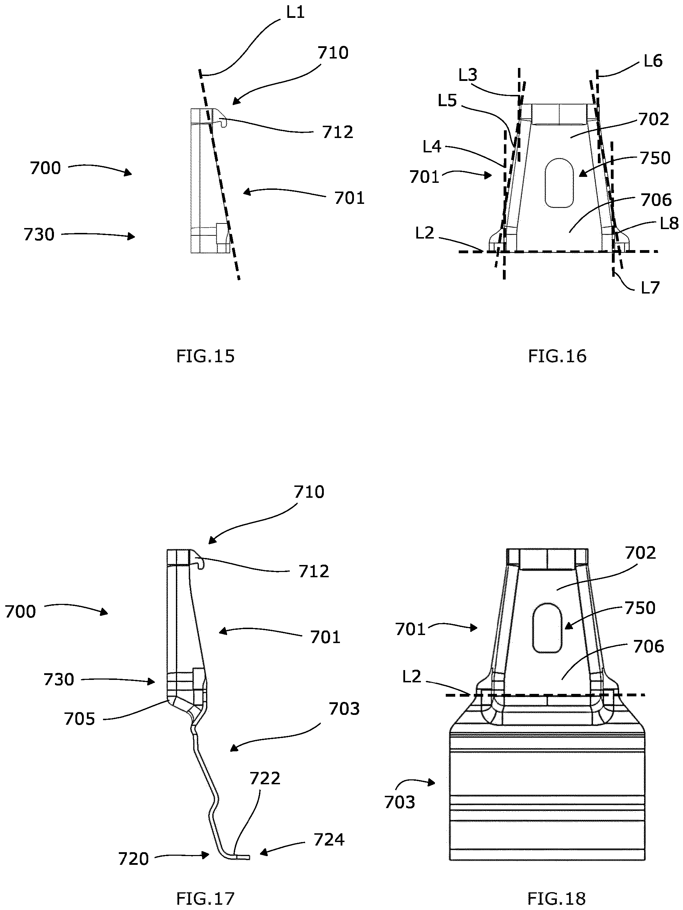

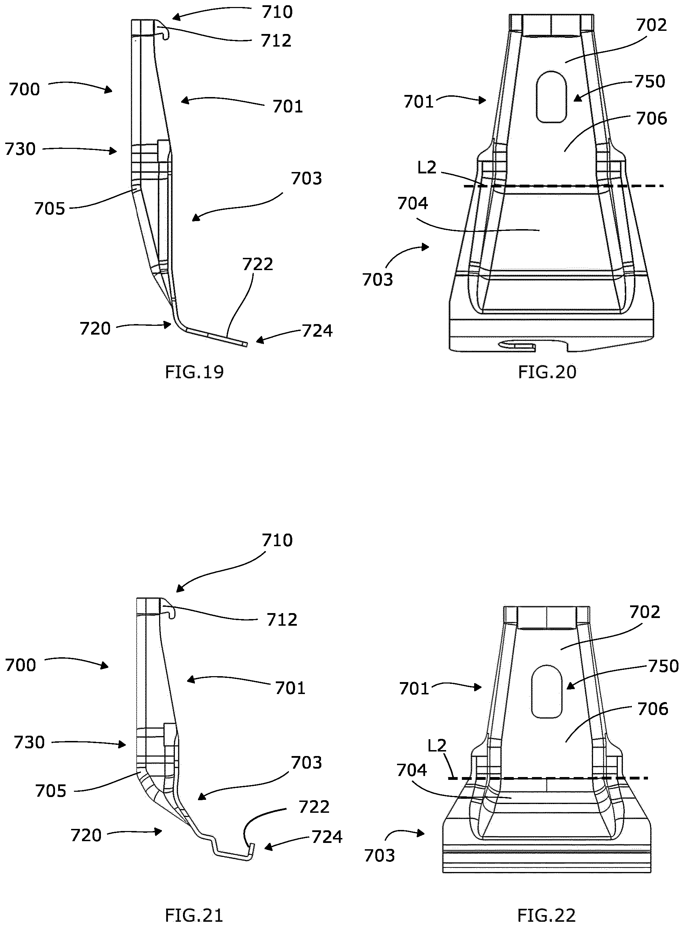

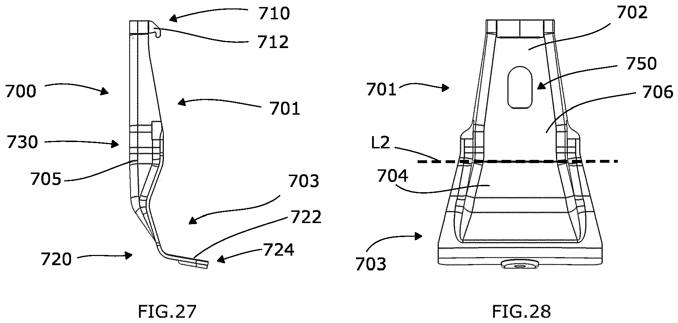

Further embodiments of load carrier brackets will be described in the following with reference to Figs. 15 - 28.

Fig. 15 shows a side view of the upper portion 701 of the load carrier bracket 700. This upper portion 701 is formed as described with reference to Figs. 5, 6 and 8 and is identical in all further described embodiments. In Fig. 15 the line L1 indicates a first characteristic of the upper part 701. More precisely, the bracket 700 widens from the holder engaging section 710 towards the lower portion 703 when viewed from the side. In other words, the width of the side walls 714 increases towards the above mentioned curved section 705 which marks a lower end of the upper part 701. The boundary between the upper portion 701 and the lower portion 703 is formed by the lower end portion as shown in Fig. 15 and indicated by line L2 in Fig. 16 which is a front view of the upper portion 701 of the load carrier brackets 700. The side walls 714 can be inclined with respect to the longitudinal direction of the load carrier bracket 700 in order to fit to the accommodating space 630 as formed in the holder 6. More precisely, the side walls 714 are arranged at an angle such that the load carrier bracket 700 widens from the holder engaging section 710 towards the lower portion 703 when viewed from the front as can be the case with the side walls of the holder described above. The inclination of the side walls is depicted by lines L5 and L8 in Fig. 16. As is further shown in Fig. 16, the upper portion 701 can comprise side wall sections which are formed parallel with respect to each other and parallel to the longitudinal extension direction of the load carrier bracket 700. These side wall sections can be formed in the area of the holder engaging section 710 and the lower end of the upper part 701 on the opposite side of the upper part 701. The extension of the side wall sections is depicted by lines L3, L4, L6 and L7.

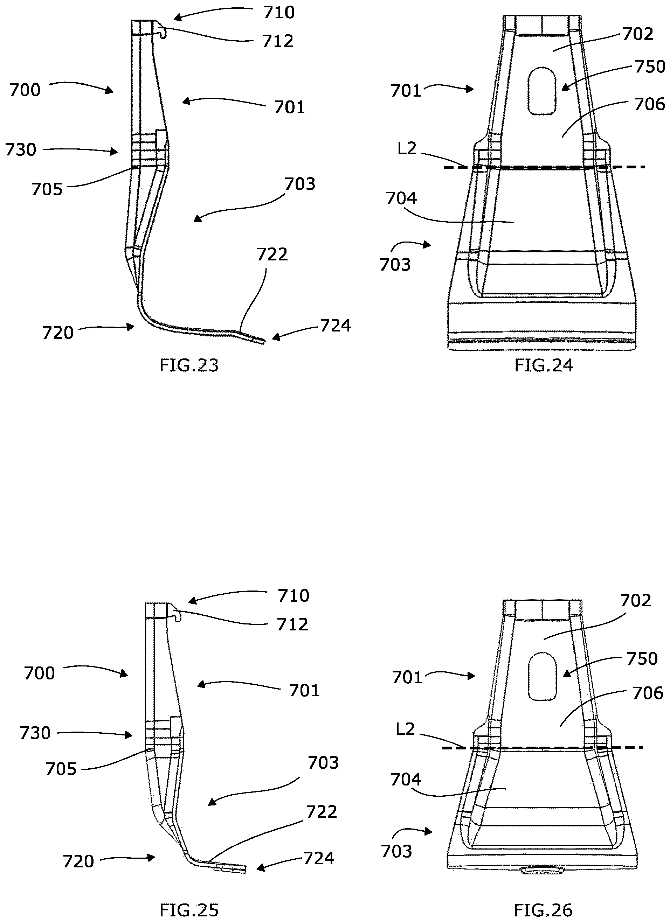

The lower portion 703 is different in every embodiment. More precisely, the lower portion 703 is respectively adapted to fit to different vehicles. Example shapes of the load carrier bracket 700, i.e. specific shapes of the lower portion 703 are shown in Figs. 17 to 28. The shapes vary in the lower portion 703, for example regarding the trough-shaped portion in formed in the lower portion 703 and regarding the vehicle engaging section 720. Most of the shapes follow the above general shape as described before and are convexly shaped. For example, in Fig. 23, a comparative example is shown in which the curved section 705 is bent in opposite direction compared to other embodiments.

## Claims

1. Load carrier bracket (700) for coupling a load carrier foot (2) to a vehicle, said load carrier bracket (700) comprising a vehicle engaging section (720) and a trough-shaped coupling portion (730), said trough-shaped coupling portion (730) extending from said vehicle engaging section (720) in longitudinal direction of the load carrier bracket (700) and comprising a holder engaging section (710) which is configured to be releasably engageable with a holder (6) of said load carrier foot (2), **characterized in that** said trough-shaped coupling portion (730) is continuously convexly formed in its longitudinal direction such that it is possible to apply higher forces on an outer surface (702) of said trough-shaped coupling portion (730).

2. Load carrier bracket (700) according to one of the preceding claims, wherein said trough-shaped coupling portion (730) is funnel-shaped with said holder engaging section (710) being formed at a narrow end.

3. Load carrier bracket (700) according to one of the preceding claims, wherein said trough-shaped coupling portion (730) extends substantially over the entire length of the bracket (700) and/or at least partially comprises a box-like shape, preferably with two side walls (714) and a bottom wall (716) which is arranged substantially perpendicular to said side walls (714).

4. Load carrier bracket (700) according to one of the preceding claims, wherein a free end (724) of the vehicle engaging section (720) protrudes from said load carrier bracket (700) on one side in a direction which is angled with respect to or is substantially perpendicular to a longitudinal extension direction of the trough-shaped coupling portion (730) and wherein said trough-shaped coupling portion (730) provides a bulging which is provided on a side of said load carrier bracket (700) opposite to the side where said free end (724) of the vehicle engaging section (720) protrudes from said load carrier bracket, and/or wherein said trough-shaped coupling portion (730) provides said bulging in only one direction, wherein said bulging is preferably a continuous and/or uninterrupted bulging.

5. Load carrier bracket (700) according to one of the preceding claims, wherein said holder engaging section (710) is configured such that said load carrier bracket (700) can be hooked on said holder (6) and wherein said holder engaging section (710) preferably comprises two hooks (712).

6. Load carrier bracket (700) according to claim 5, wherein said hooks (712) and a free end (724) of said vehicle engaging section (720) protrude from the same side of said load carrier bracket (700) and/or wherein said hooks (712) are configured such that they can be engaged with an upper edge portion (619) of a sleeve portion (600), wherein preferably the hooks can be brought in contact with a supporting surface (620) of said upper edge portion (619).

7. Load carrier bracket (700) according to one of claims 5 and 6, further comprising an upper portion (701) insertable into a holder of said load carrier foot (6), wherein said upper portion (701) is configured to receive a pushing force for pushing said holder engaging portion (710) in a direction for bringing said hooks (712) into position for an engagement with said holder (6).

## Patentansprüche

1. Lastträgerklemme (700) zum Koppeln eines Lastträgerfußes (2) an ein Fahrzeug, wobei die Lastträgerklemme (700) einen Fahrzeugeingriffsabschnitt (720) und einen muldenförmigen Kopplungsteil (730) umfasst, wobei sich der muldenförmige Kopplungsteil (730) vom Fahrzeugeingriffsabschnitt (720) in einer Längsrichtung der Lastträgerklemme (700) erstreckt und einen Halterungseingriffsabschnitt (710) umfasst, der dazu ausgestaltet ist, lösbar mit einer Halterung (6) des Lastträgerfußes (2) in Eingriff bringbar zu sein, **dadurch gekennzeichnet, dass** der muldenförmige Kopplungsteil (730) in seiner Längsrichtung durchgängig konvex ausgebildet ist, so dass es möglich ist, größere Kraft auf eine Außenfläche (702) des muldenförmigen Kopplungsteils (730) aufzubringen.

2. Lastträgerklemme (700) nach einem der vorhergehenden Ansprüche, wobei der muldenförmige Kopplungsteil (730) trichterförmig ist, wobei der Halterungseingriffsabschnitt (710) an einem schmalen Ende ausgebildet ist.

3. Lastträgerklemme (700) nach einem der vorhergehenden Ansprüche, wobei sich der muldenförmige Kopplungsteil (730) im Wesentlichen über die gesamte Länge der Klemme (700) erstreckt und/oder mindestens teilweise eine kastenartige Form mit vorzugsweise zwei Seitenwänden (714) und einer Bodenwand (716) umfasst, die im Wesentlichen senkrecht zu den Seitenwänden (714) angeordnet ist.

4. Lastträgerklemme (700) nach einem der vorhergehenden Ansprüche, wobei ein freies Ende (724) des Fahrzeugeingriffsabschnitts (720) auf einer Seite von der Lastträgerklemme (700) in einer Richtung hervorsteht, die in Bezug auf eine Längserstreckungsrichtung des muldenförmigen Kopplungsteils (730) angewinkelt oder dazu im Wesentlichen senkrecht ist, und wobei der muldenförmige Kopplungsteil (730) eine Wölbung bereitstellt, die an einer Seite der Lastträgerklemme (700) bereitgestellt ist, die der Seite gegenüberliegt, an der das freie Ende (724) des Fahrzeugeingriffsabschnitts (720) von der Lastträgerklemme hervorsteht, und/oder wobei der muldenförmige Kopplungsteil (730) die Wölbung nur in einer Richtung bereitstellt, wobei die Wölbung vorzugsweise eine durchgängige und/oder ununterbrochene Wölbung ist.

5. Lastträgerklemme (700) nach einem der vorhergehenden Ansprüche, wobei der Halterungseingriffsabschnitt (710) derart ausgestaltet ist, dass die Lastträgerklemme (700) an der Halterung (6) eingehakt werden kann, und wobei der Halterungseingriffsabschnitt (710) vorzugsweise zwei Haken (712) umfasst.

6. Lastträgerklemme (700) nach Anspruch 5, wobei die Haken (712) und ein freies Ende (724) des Fahrzeugeingriffsabschnitts (720) von der gleichen Seite der Lastträgerklemme (700) hervorstehen und/oder wobei die Haken (712) derart ausgestaltet sind, dass sie mit einem oberen Randteil (619) eines Hülsenteils (600) in Eingriff gebracht werden können, wobei die Haken vorzugsweise mit einer Stützfläche (620) des oberen Randteils (619) in Kontakt gebracht werden können.

7. Lastträgerklemme (700) nach einem der Ansprüche 5 und 6, ferner umfassend einen oberen Teil (701), der in eine Halterung des Lastträgerfußes (6) einführbar ist, wobei der obere Teil (701) dazu ausgestaltet ist, eine Schubkraft zum Schieben des Halterungseingriffsteils (710) in eine Richtung aufzunehmen, um die Haken (712) in Position für einen Eingriff in die Halterung (6) zu bringen.

## Revendications

1. Patte de dispositif porte-charge (700) pour le couplage d'un pied de dispositif porte-charge (2) à un véhicule, ladite patte de dispositif porte-charge (700) comprenant une section (720) de mise en prise avec un véhicule et une partie de couplage en forme de goulotte (730), ladite partie de couplage en forme de goulotte (730) s'étendant de ladite section (720) de mise en prise avec un véhicule dans la direction longitudinale de la patte de dispositif porte-charge (700) et comprenant une section (710) de mise en prise avec un support qui est configurée pour être mise en prise de manière libérable avec un support (6) dudit pied de dispositif porte-charge (2), **caractérisée en ce que** ladite partie de couplage en forme de goulotte (730) est formée de façon convexe en continu dans sa direction longitudinale de telle sorte qu'il est possible d'appliquer des forces plus élevées sur une surface externe (702) de ladite partie de couplage en forme de goulotte (730).

2. Patte de dispositif porte-charge (700) selon l'une des revendications précédentes, dans laquelle ladite partie de couplage en forme de goulotte (730) est en forme d'entonnoir, ladite section (710) de mise en prise avec un support étant formée au niveau d'une extrémité étroite.

3. Patte de dispositif porte-charge (700) selon l'une des revendications précédentes, dans laquelle ladite partie de couplage en forme de goulotte (730) s'étend sensiblement sur toute la longueur de la patte (700) et/ou comprend au moins partiellement une forme de type boîte, avec de préférence deux parois latérales (714) et une paroi inférieure (716) qui est disposée sensiblement perpendiculairement auxdites parois latérales (714).

4. Patte de dispositif porte-charge (700) selon l'une des revendications précédentes, dans laquelle une extrémité libre (724) de la section (720) de mise en prise avec un véhicule fait saillie depuis ladite patte de dispositif porte-charge (700) sur un côté dans une direction qui est inclinée par rapport à, ou est sensiblement perpendiculaire à, une direction d'extension longitudinale de la partie de couplage en forme de goulotte (730) et dans laquelle ladite partie de couplage en forme de goulotte (730) fournit un renflement qui est situé sur un côté de ladite patte de dispositif porte-charge (700) opposé au côté où ladite extrémité libre (724) de la section (720) de mise en prise avec un véhicule fait saillie depuis ladite patte de dispositif porte-charge, et/ou dans laquelle ladite partie de couplage en forme de goulotte (730) fournit ledit renflement dans une seule direction, ledit renflement étant de préférence un renflement continu et/ou ininterrompu.

5. Patte de dispositif porte-charge (700) selon l'une des revendications précédentes, dans laquelle ladite section (710) de mise en prise avec un support est configurée de sorte que ladite patte de dispositif porte-charge (700) peut être accrochée sur ledit support (6) et dans laquelle ladite section (710) de mise en prise avec le support comprend de préférence deux crochets (712).

6. Patte de dispositif porte-charge (700) selon la revendication 5, dans laquelle lesdits crochets (712) et une extrémité libre (724) de ladite section (720) de mise en prise avec un véhicule font saillie depuis le même côté de ladite patte de dispositif porte-charge (700) et/ou dans laquelle lesdits crochets (712) sont configurés de sorte qu'ils peuvent être mis en prise avec une partie de bord supérieur (619) d'une partie manchon (600), dans laquelle les crochets peuvent de préférence être mis en contact avec une surface de support (620) de ladite partie de bord supérieur (619).

7. Patte de dispositif porte-charge (700) selon l'une des revendications 5 et 6, comprenant en outre une partie supérieure (701) pouvant être insérée dans un support dudit pied de dispositif porte-charge (6), dans laquelle ladite partie supérieure (701) est configurée pour recevoir une force de poussée pour pousser ladite partie (710) de mise en prise avec le support dans une direction pour amener lesdits crochets (712) en position pour une mise en prise avec ledit support (6).
